(19) Europäisches Patentamt
European Patent Office
Office européen des brevets

(11) **EP 3 721 300 B1**

(12) **FASCICULE DE BREVET EUROPEEN**

(45) Date de publication et mention de la délivrance du brevet:
**08.12.2021 Bulletin 2021/49**

(21) Numéro de dépôt: **18833453.6**

(22) Date de dépôt: **06.12.2018**

(51) Int Cl.:
**G05B 13/04** *(2006.01)*

(86) Numéro de dépôt international:
**PCT/FR2018/053141**

(87) Numéro de publication internationale:
**WO 2019/110942 (13.06.2019 Gazette 2019/24)**

(54) **PROCEDE D'OPTIMISATION DES PERFORMANCES D'UN ASSERVISSEMENT D'UN SYSTEME MECATRONIQUE, DISPOSITIF ADAPTE**

VERFAHREN ZUR OPTIMIERUNG DER LEISTUNG EINES SERVOSTEUERUNGSSYSTEMS EINES MECHATRONISCHEN SYSTEMS UND ENTSPRECHENDE VORRICHTUNG

METHOD FOR OPTIMISING THE PERFORMANCE OF A SERVO CONTROL SYSTEM OF A MECHATRONIC SYSTEM, AND SUITABLE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2017 FR 1761757**

(43) Date de publication de la demande:
**14.10.2020 Bulletin 2020/42**

(73) Titulaire: **iXBlue**
**78100 Saint-Germain-en-Laye (FR)**

(72) Inventeurs:
• **VAU, Bernard**
**78100 Saint-Germain-en-Laye (FR)**
• **MINNE, Lionel**
**78100 Saint-Germain-en-Laye (FR)**

(74) Mandataire: **Jacobacci Coralis Harle**
**32, rue de l'Arcade**
**75008 Paris (FR)**

(56) Documents cités:
**US-A1- 2006 284 588      US-B2- 8 386 058**

• **GARCIA D ET AL: "Robust PID controller tuning with specification on modulus margin", AMERICAN CONTROL CONFERENCE, 2004. PROCEEDINGS OF THE 2004 BOSTON, MA, USA JUNE 30-JULY 2, 2004, PISCATAWAY, NJ, USA,IEEE, 30 juin 2004 (2004-06-30), page 3297, XP031989313, ISBN: 978-0-7803-8335-7 cité dans la demande**

**EP 3 721 300 B1**

**Description**

DOMAINE TECHNIQUE AUQUEL SE RAPPORTE L'INVENTION

La présente invention concerne, de manière générale, le domaine des techniques d'asservissement de systèmes mécatroniques. Elle concerne plus précisément un procédé d'optimisation des performances d'un asservissement d'un système mécatronique ainsi qu'un dispositif adapté à l'exécution du procédé.

ARRIERE-PLAN TECHNOLOGIQUE

Les systèmes mécatroniques asservis sont largement utilisés. L'actionneur dans ces systèmes est généralement un moteur électrique, par exemple rotatif ou linéaire, notamment moteur à courant continu, moteur à courant alternatif sans balai (« AC brushless »), moteur à courant continu sans balai (« DC brushless »), etc. La commande du moteur est un signal proportionnel au couple ou à la force qui doit être délivré par le moteur. Le ou les capteurs en relation avec le moteur mesurent soit une position angulaire ou linéaire (par exemple capteur de type codeur incrémental), soit une vitesse angulaire ou linéaire (par exemple capteur de type tachymètre ou gyromètre).

Ces systèmes mécatroniques asservis sont en particulier utilisés dans les simulateurs mécaniques de mouvements, les tourelles multiaxes de type Pan&Tilt (supportant, par exemple, d'une caméra embarquée) et servant au pointage d'une cible ou à la stabilisation d'une ligne de visée.

Une des difficultés de mise en œuvre de ces asservissements réside dans le réglage des correcteurs qui y sont mis en œuvre. Ces asservissements peuvent être classiquement des correcteurs de type PID, ou peuvent être un peu plus complexes, en particulier dans les cas où il est nécessaire d'avoir deux intégrateurs dans la loi de commande, ce qui arrive fréquemment dans un contexte de stabilisation gyroscopique de ligne de visée.

Parmi les correcteurs linéaires plus élaborés, on peut mentionner les correcteurs de type RST (avec placement de pôles robustes), LQG-LTR associés à une méthodologie de réglage des paramètres par exemple celle du contrôle d'état standard de Philippe de Larminat, ou encore la commande prédictive, ou bien la commande Hinfini.

On note également que même pour un système mécatronique où un correcteur simple de type PID peut être suffisant, l'emploi d'un correcteur de type RST présente l'avantage de permettre le contrôle de la décroissance du gain du correcteur en hautes fréquences (« roll-off »), ce qui présente un avantage du point de vue de la robustesse aux incertitudes non structurées et de la sensibilité au bruit.

On rappelle que la robustesse concerne l'insensibilité du correcteur aux incertitudes de la modélisation physique de la machine à commander. Ces incertitudes peuvent être de deux types. On distingue les incertitudes structurées qui concernent les variations paramétriques du modèle, par exemple des variations de la valeur d'une inertie ou d'une masse, et les incertitudes non structurées qui correspondent à des dynamiques négligées, par exemple des retards ou modes résonants en haute fréquence.

Face à ces difficultés de réglage des correcteurs il a été proposé des techniques d'autoréglages (« autotuning ») des correcteurs. Il en existe de très nombreuses dans la littérature.

On peut citer à titre d'exemple, dans le domaine des simulateurs mécaniques de mouvement, la demande de brevet WO2006/131664 « Device for automatically adjusting servo controls of a movement mechanical simulator and an associated device » au nom de M. Bernard Vau et à laquelle on peut se référer si on le souhaite. Ce document propose une technique de réglage d'asservissements de simulateurs de mouvements, avec un correcteur de type RST ou LQG-LTR, disposant déjà d'au moins deux paramètres de réglage scalaires To et Tc en l'espèce, en vue d'ajuster le correcteur en fonction de la marge de retard cible (MRC) et de la marge de module cible (MMC) de la boucle fermée correspondante. Le paramètre To permet de gérer un compromis entre le choix d'une dynamique de rejet des perturbations élevé et une grande marge de retard et le paramètre Tc permet d'arbitrer un compromis entre la marge de module et la sensibilité de la commande par rapport au bruit.

Toujours dans ce document, l'indicateur MMC (marge de module cible, c'est-à-dire obtenue en simulation lors de la synthèse du correcteur) donne une information globale sur la robustesse de la boucle fermée par rapport aux incertitudes pouvant affecter le modèle du système. La valeur désirée de cette marge de module cible varie peu en général et est de l'ordre de 0,5.

L'autre indicateur MRC (marge de retard cible, c'est-à-dire obtenue en simulation lors de la synthèse du correcteur) est indirectement un indicateur de performances de la boucle fermée en termes de rejet de perturbations puisque à iso marge de module cible, la diminution de la marge de retard cible associée au modèle du système simple à temps continu, c'est-à-dire le double intégrateur évoqué plus haut, implique un accroissement de la dynamique de rejet de perturbation.

On rappelle que la performance se rapporte essentiellement à la dynamique de rejet des perturbations pouvant affecter le système, notamment dues à un couple de freinage causé par des frottements non pris en compte dans le modèle.

Toujours dans ce document, les paramètres MRC et MMC doivent être définis au préalable par un technicien, le procédé d'ajustement automatique se chargeant pour un modèle du système à inertie déterminée/connue d'amener le correcteur à avoir les marges de retard et de module cibles voulues, par calcul de coefficients de bas niveau. Si du point de vue heuristique, il est beaucoup plus facile de définir au préalable ces paramètres de haut niveaux (MMC et MRC) plutôt qu'une multitude de paramètres de bas niveau, il n'en demeure pas moins qu'il reste pour le technicien à réaliser un travail de préparation afin de notamment déterminer une valeur du paramètre MRC telle que l'asservissement ait une bonne dynamique de rejet de perturbation tout en entraînant des niveaux de robustesse et de stabilité corrects.

On rappelle que la stabilité est l'aptitude du système asservi à se comporter de telle sorte que l'écart entre la consigne et la sortie du système mécatronique tende vers une valeur finie lorsque la consigne est elle même finie. Toutefois, cette convergence peut se faire au bout d'un temps très élevé, ce qui n'est pas souhaitable. C'est pour cela qu'on introduit la notion de performance pour caractériser un asservissement.

Plus précisément, la demande de brevet WO2006/131664 précitée revendiquait un procédé de réglage mis en œuvre dans un simulateur de mouvement pouvant embarquer une charge, ledit simulateur comportant un dispositif mécanique et une unité de contrôle, ledit dispositif mécanique comportant des moyens d'entraînement pour mettre en mouvement un plateau apte à porter ladite charge ; un amplificateur de courant apte à actionner lesdits moyens d'entraînement en réponse à un signal de commande ; un capteur apte à mesurer une position dudit plateau; et ladite unité de contrôle comportant un correcteur apte à émettre ledit signal de commande en fonction d'un signal de consigne de position et de ladite position mesurée. Ce procédé de réglage est caractérisé en ce qu'il permet de régler automatiquement ledit correcteur pour asservir en position le mouvement dudit plateau embarquant une charge donnée, ledit procédé comportant : une étape initiale de synthèse d'un correcteur robuste, ladite synthèse étant fondée sur une première modélisation physique du dispositif mécanique comportant au moins un paramètre d'inertie, ledit correcteur robuste obtenu permettant l'asservissement dudit dispositif mécanique sur une plage de valeur dudit paramètre d'inertie s'étendant entre un paramètre d'inertie minimum et un paramètre d'inertie maximum; et, après avoir positionné ladite charge donnée sur ledit plateau, une étape de test au cours de laquelle ledit dispositif mécanique, asservi au moyen dudit correcteur robuste déterminé lors de l'étape initiale, est actionné selon un profil de consigne de position prédéfini respectant des contraintes sur l'accélération, la vitesse et la position du mouvement, ledit signal de commande et ladite position mesurée étant mémorisés à chaque instant en tant que données de l'étape de test ; une étape d'identification qui, à partir desdites données de l'étape de test, permet de déterminer la valeur d'une pluralité de paramètres physiques d'une deuxième modélisation dudit dispositif mécanique embarquant ladite charge donnée, ladite pluralité de paramètres physiques comportant au moins ledit paramètre d'inertie ; et, une étape finale de synthèse d'un correcteur optimal adapté à ladite charge donnée, dans laquelle le paramètre d'inertie prend la valeur du paramètre d'inertie déterminé lors de l'étape d'identification.

Dans des modalités de mise en œuvre particulières qui étaient revendiquées, lesdits correcteurs robuste ou optimal comportent quatre paramètres de réglage scalaires de haut niveau, et ladite étape initiale comporte d'abord, en faisant varier un premier paramètre scalaire parmi lesdits paramètres scalaires, la recherche d'un correcteur ayant une marge de module inférieure à une marge de module seuil pour toutes les valeurs de moment d'inertie de ladite plage de moment d'inertie, puis, en faisant varier un autre paramètre scalaire, dit deuxième paramètre, parmi lesdits paramètres scalaires, la recherche d'un correcteur ayant une marge de retard inférieure à une marge de retard seuil pour toutes les valeurs de moment d'inertie de ladite plage de moment d'inertie. Il était également revendiqué, la valeur du moment d'inertie ayant été identifiée, que ladite étape finale comporte d'abord, en faisant varier ledit deuxième paramètre, la recherche d'un correcteur ayant une marge de retard supérieure à ladite marge de retard seuil, puis, en faisant varier encore un autre paramètre scalaire, dit troisième paramètre, parmi lesdits quatre paramètres scalaires, la recherche d'un correcteur optimal ayant une marge de module supérieure à ladite marge de module seuil.

Même si la demande de brevet WO2006/131664 précitée permet de réduire le nombre de paramètres finalement à régler essentiellement à un seul (le paramètre MRC), ce qui est déjà très appréciable par rapport aux nombreux paramètres de bas niveau d'un correcteur (quatre pour un simple PID et généralement davantage pour un correcteur de type RST ou LQG), ce travail de préparation entraîne une perte de temps et est d'un coût certain dans un cadre industriel.

L'invention proposée, outre son extension à tout asservissement avec correcteur d'un système mécatronique, vise à supprimer cette partie de travail de préparation lors de la mise en œuvre du procédé de la demande de brevet WO2006/131664 citée plus haut. Ceci est obtenu par le développement d'un procédé automatisant le choix du coefficient MRC.

OBJET DE L'INVENTION

Afin de remédier à l'inconvénient précité de l'état de la technique, la présente invention propose un procédé d'optimisation automatisé d'un asservissement d'un système mécatronique réel commandé par une consigne $Y_c(t)$, ledit asservissement comportant un correcteur C linéaire dans une boucle de rétroaction incluant le système mécatronique G, le correcteur étant défini par des paramètres de correcteur, le système mécatronique réel G ayant été modélisé par une fonction de transfert dite fonction de transfert nominale $G_o$ entre une commande U(t) d'entrée et une variable de sortie Y(t) mesurée pour asservissement, l'asservissement étant caractérisé par une robustesse par rapport aux incertitudes structurées et non structurées du système mécatronique et une performance déterminables, dans lequel procédé et en utilisant la fonction de transfert nominale, on détermine des paramètres de correcteur assurant à la commande un compromis entre la performance et la robustesse satisfaisant, la robustesse de la boucle appliquée à la fonction de transfert nominale étant dépendante d'une marge de module MMC, la performance de la boucle appliquée à la fonction de transfert nominale étant dépendante d'une marge de retard MRC.

Selon l'invention, en outre, par une procédure itérative, on détermine parmi les correcteurs ayant un compromis entre la performance et la robustesse satisfaisant, le correcteur le plus performant, dit optimal,

ladite procédure itérative consistant à faire évoluer une valeur courante de la marge de retard MRC, pour une même marge de module MMC et à tester individuellement le ou les correcteurs ayant marge de retard MRC correspondant à la valeur courante sur l'asservissement du système mécatronique réel et en injectant dans la boucle un signal d'excitation w(t) et à évaluer deux indicateurs effectifs basés sur au moins une marge statique effective $M_{st}$ et une marge dynamique effective $M_{dyn}$, la marge statique effective $M_{st}$ caractérisant la robustesse globale de la boucle par rapport aux incertitudes structurées et non structurées, et la marge dynamique effective $M_{dyn}$ caractérisant la robustesse de la boucle par rapport aux incertitudes non structurées, les deux indicateurs effectifs étant :

- un indicateur statique effectif $Ind_s$ qui est la marge statique effective $M_{st}$ et
- un indicateur dynamique effectif $Ind_D$ qui est une fonction directe de la marge dynamique effective $M_{dyn}$,

la procédure itérative étant arrêtée sur un correcteur, qui est alors le correcteur optimal, lorsque les deux indicateurs effectifs $Ind_s$ et $Ind_D$ deviennent supérieurs à des seuils respectifs $S_s$ et $S_D$ déterminés pour une valeur courante de marge de retard nominale MRC la plus faible possible, à un même niveau de marge de module nominale MMC, et donc pour la plus grande performance.

D'autres caractéristiques non limitatives et avantageuses du procédé conforme à l'invention, prises individuellement ou selon toutes les combinaisons techniquement possibles, sont précisées ci-dessous.

- le correcteur le plus performant, dit optimal, est le correcteur ayant le meilleur compromis entre la performance et la robustesse par rapport aux incertitudes du modèle de synthèse,
- lors de chaque évaluation, on estime une fonction de sensibilité complémentaire effective $T_{yp}(s)$ et on calcule les deux indicateurs effectifs $Ind_s$ et $Ind_D$ à partir de ladite fonction de sensibilité complémentaire effective $T_{yp}(s)$, l'indicateur statique effectif $Ind_s$ étant la marge statique effective $M_{st}$ qui est égale à l'inverse de la norme $H_\infty$ de la fonction de sensibilité complémentaire effective :

$$M_{st} = \frac{1}{\max_\omega |T_{yp}(j\omega)|},$$

et

l'indicateur dynamique effectif $Ind_D$ étant un rapport entre, au numérateur, la marge dynamique effective $M_{dyn}$ et, au dénominateur, un paramètre choisi parmi la marge de retard nominale MRC et la marge dynamique nominale $M_{dyn0}$,
la marge dynamique effective $M_{dyn}$ étant égale à l'inverse du maximum du gain du produit de la fonction de sensibilité complémentaire effective par la fréquence $\omega$ :

$$M_{dyn} = \frac{1}{\max_\omega |\omega T_{yp}(j\omega)|},$$

la marge de retard nominale MRC et la marge dynamique nominale $M_{dyn0}$ étant obtenues par calcul sur la boucle appliquée à la fonction de transfert nominale,

- l'évaluation des deux indicateurs effectifs se fait lors ou à la suite du test,
- la fonction de transfert nominale du système mécatronique est une fonction à simple intégrateur ou à double intégrateur,

- la commande U(t) et la variable de sortie Y(t) sont continues,
- la commande U(t) et la variable de sortie Y(t) sont discrètes, l'asservissement mettant en œuvre un échantillonnage temporel des données,
- la variable de sortie Y(t) est une variable de position P(t),
- la variable de sortie Y(t) est une variable de vitesse V(t),
- la consigne $Y_c$(t) est une variable de position P(t),
- la consigne $Y_c$(t) est une variable de vitesse V(t),
- la variable de sortie et la consigne $Y_c$(t) sont de même type, soit des variables de position, soit des variables de vitesse,
- la variable de sortie et la consigne $Y_c$(t) sont de types différents et un calcul est effectué pour les rendre de même type,
- la commande U(t) et la variable de sortie Y(t) sont des scalaires,
- la commande U(t) et la variable de sortie Y(t) sont des vecteurs,
- le signal d'excitation est un bruit à large bande,
- le signal d'excitation est calculé et est sensiblement un bruit blanc,
- le signal d'excitation est calculé par un générateur de séquence binaire pseudo aléatoire SBPA,
- on estime la fonction de sensibilité complémentaire effective $T_{yp}(s)$ par une méthode d'identification, ladite méthode d'identification étant choisie parmi les méthodes suivantes :

  - méthode d'identification récursive en temps réel, de préférence par une méthode d'identification paramétrique,
  - méthode d'identification non paramétrique par identification spectrale, notamment par utilisation d'une transformée de Fourier discrète glissante,

- la méthode d'identification est mise en œuvre en temps réel, c'est-à-dire en ligne, ou en temps différé, c'est-à-dire hors ligne,
- on met en œuvre au sein de la boucle un calculateur, ledit calculateur comportant une partie de calcul de correction correspondant au correcteur C, le correcteur C recevant en entrée ou utilisant un signal résultant de la différence effectuée par le calculateur entre la consigne $Y_c$(t) et la variable de sortie Y(t) mesurée pour asservissement et produisant en sortie un signal de commande U(t), ledit calculateur étant en outre configuré pour que lors des tests, le signal d'excitation w(t) soit ajouté au signal de commande avant envoi au système mécatronique G.

La présente invention concerne encore un dispositif d'asservissement d'un système mécatronique réel commandé par une consigne $Y_c$(t), ledit asservissement comportant un correcteur C linéaire dans une boucle de rétroaction incluant le système mécatronique G, le correcteur étant défini par des paramètres de correcteur, le système mécatronique réel G pouvant être modélisé par une fonction de transfert dite fonction de transfert nominale $G_o$ entre une commande U(t) d'entrée et une variable de sortie Y(t) mesurée pour asservissement, l'asservissement étant caractérisé par une robustesse par rapport aux incertitudes structurées et non structurées du système mécatronique et une performance déterminables.

Selon l'invention, le dispositif comporte un calculateur configuré pour l'exécution du procédé d'optimisation automatisé de l'invention et dans lequel lors de tests sur le système mécatronique réel le calculateur assure l'asservissement par un traitement de signaux par un correcteur testé, le correcteur testé C recevant en entrée ou utilisant un signal résultant de la différence effectuée par le calculateur entre la consigne $Y_c$(t) et la variable de sortie Y(t) mesurée pour asservissement et produisant en sortie un signal de commande U(t), ledit calculateur étant en outre configuré pour que lors des tests, un signal d'excitation w(t) soit ajouté au signal de commande avant envoi au système mécatronique G.

D'autres caractéristiques non limitatives et avantageuses du dispositif conforme à l'invention, prises individuellement ou selon toutes les combinaisons techniquement possibles, sont précisées ci-dessous.

- le calculateur est configuré pour déterminer, en utilisant la fonction de transfert nominale, des correcteurs et leurs paramètres de correcteur ayant un compromis entre la performance et la robustesse satisfaisant, la robustesse de la boucle appliquée à la fonction de transfert nominale étant dépendante d'une marge de module MMC, la performance de la boucle appliquée à la fonction de transfert nominale étant dépendante d'une marge de retard MRC,
- un dispositif de calcul externe est utilisé et configuré pour déterminer, en utilisant la fonction de transfert nominale, des correcteurs et leurs paramètres de correcteur ayant un compromis entre la performance et la robustesse satisfaisant, la robustesse de la boucle appliquée à la fonction de transfert nominale étant dépendante d'une marge de module MMC, la performance de la boucle appliquée à la fonction de transfert nominale étant dépendante d'une marge de retard MRC,
- le dispositif de calcul externe est un appareil de calcul générique, notamment un ordinateur ou un microordinateur,
- le calculateur est en outre configuré pour évaluer deux indicateurs effectifs basés sur au moins une marge statique effective $M_{st}$ et une marge dynamique effective $M_{dyn}$, la marge statique effective $M_{st}$ caractérisant la robustesse

globale de la boucle par rapport aux incertitudes structurées et non structurées, et la marge dynamique effective $M_{dyn}$ caractérisant la robustesse de la boucle par rapport aux incertitudes non structurées, les deux indicateurs effectifs étant :

- un indicateur statique effectif $Ind_s$ qui est la marge statique effective $M_{st}$ et
- un indicateur dynamique effectif $Ind_D$ qui est une fonction directe de la marge dynamique effective $M_{dyn}$,
- un dispositif de calcul externe est utilisé et configuré pour évaluer à la suite de chaque test deux indicateurs effectifs basés sur au moins une marge statique effective $M_{st}$ et une marge dynamique effective $M_{dyn}$, la marge statique effective $M_{st}$ ,qui est équivalente à la marge de module complémentaire, caractérisant un niveau de robustesse global de la boucle par rapport aux incertitudes structurées et non structurées, et la marge dynamique effective caractérisant un niveau de robustesse de la boucle par rapport aux dynamiques mineures que sont les incertitudes non structurées et correspondant à une généralisation de la marge de retard, les deux indicateurs effectifs étant :

  - un indicateur statique effectif $Ind_s$ qui est la marge statique effective $M_{st}$ et
  - un indicateur dynamique effectif $Ind_D$ qui est une fonction directe de la marge dynamique effective $M_{dyn}$,

- le calculateur est en outre configuré pour exécuter une procédure itérative de tests et d'évaluations, ladite procédure itérative étant arrêtée sur un correcteur, qui est alors le correcteur optimal, lorsque les deux indicateurs effectifs $Ind_s$ et $Ind_D$ deviennent supérieurs à des seuils respectifs déterminés pour une valeur courante de marge de retard la plus faible possible et donc pour la plus grande performance,
- un dispositif de calcul externe est utilisé et configuré pour exécuter une procédure itérative de tests et d'évaluations, ladite procédure itérative étant arrêtée sur un correcteur, qui est alors le correcteur optimal, lorsque les deux indicateurs effectifs $Ind_s$ et $Ind_D$ deviennent supérieurs à des seuils respectifs déterminés pour une valeur courante de marge de retard la plus faible possible et donc pour la plus grande performance.

Le procédé selon l'invention est particulièrement simple d'utilisation. Il présente l'avantage de pouvoir être activé par un technicien de maintenance ou de mise en route, celui-ci n'étant donc plus forcément être un automaticien spécialiste du réglage des boucles d'asservissement. L'utilisateur final n'a même plus besoin de spécifier les marges de retard, MRC, à atteindre comme dans le procédé connu pour obtenir automatiquement la synthèse du correcteur optimal qui présente un compromis entre la performance et la robustesse satisfaisant, de préférence le meilleur compromis.

## DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématisé, un système mécatronique dans une boucle de rétroaction pour asservissement et comportant un correcteur et recevant un signal de consigne, et
- la figure 2 représente un exemple de détermination d'un correcteur optimal sous forme d'un organigramme.

On va maintenant décrire dans le détail la mise en œuvre de l'invention en commençant par des rappels et informations de contexte utiles à la compréhension de ladite invention.

L'invention s'applique donc à des systèmes électromécaniques, et plus généralement mécatroniques, commandés en force ou en couple, dont on suppose ici qu'ils sont monovariables, c'est-à-dire ne possédant qu'une entrée et une sortie et dont les grandeurs mesurées peuvent être :

- une position notée P(t), qui peut être angulaire ou linéaire, ou
- une vitesse notée V(t),

La commande du moteur, en fait de l'amplificateur de l'étage d'électronique de puissance associé au moteur, est proportionnelle à un couple ou à une force. On la note U(t).

La variable U(t) constitue l'entrée du système mécatronique et la variable P(t) ou V(t) correspond à la grandeur asservie Y(t) qui est mesurée en sortie et que l'on cherche à contrôler.

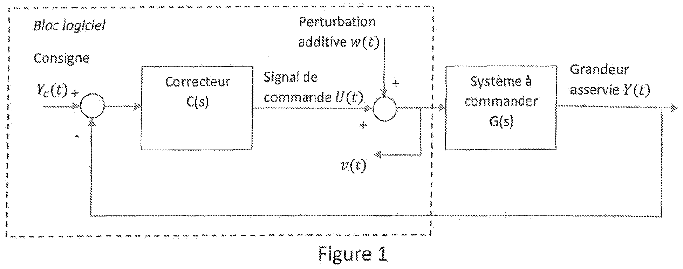

Le schéma bloc de la figure 1 permet de visualiser la boucle d'asservissement avec son correcteur C(s) en généralisant les variables à notamment des variables de consigne $Y_c(t)$ et asservie Y(t). Ce schéma fait intervenir une fonction de transfert à temps continu du correcteur, néanmoins il aurait été possible de le représenter au moyen d'une fonction en temps discret.

Le correcteur mis en œuvre dans la boucle d'asservissement peut par exemple être de type LQG-H2 dit LQG. La synthèse d'un tel correcteur est effectuée par exemple à l'aide de la méthodologie du contrôle d'état standard. Cette méthodologie est décrite, par exemple, dans l'ouvrage de M Philippe de Larminat intitulé " contrôle d'état standard " publié en 2000 aux éditions HERMES. En variante à la méthodologie du contrôle d'état standard, la méthodologie de placement de pôles robuste pourrait par exemple être utilisée. Cette méthodologie est décrite dans l'ouvrage de Philippe de Larminat intitulé " automatique : commande des systèmes linéaires " aux éditions HERMES. Le correcteur aurait alors une forme polynomiale et serait de structure RST qui est la forme la plus générale des correcteurs commandant des systèmes possédant une variable de commande et une variable mesurée. Il est également possible d'implémenter le correcteur LQG sous forme RST. Le correcteur peut comporter un filtre de Kalman. La méthodologie utilisée ici peut être possiblement utilisée pour le réglage des correcteurs PID.

Un système électromécanique, et plus généralement mécatronique, possède des non linéarités qui peuvent être dues à des frottements secs, à des couples d'inerties, etc. Néanmoins dans le cadre de la synthèse d'une loi de commande monovariable, on se restreint en général à une représentation/modélisation linéaire dudit système, les représentations/modélisations les plus répandues des systèmes monovariables étant les fonctions de transfert, en particulier les fonctions de transfert à temps continu, qui s'expriment au moyen de la variable de Laplace s.

Dans la suite le qualificatif « nominal », par exemple marges nominales, sera utilisé pour qualifier des éléments obtenus en simulation avec modélisation par un modèle nominal du système mécatronique à commander, encore dit modèle de synthèse, modèle dont la structure est simplifiée et correspond pratiquement à une fonction de transfert d'un double intégrateur (pour un asservissement de position). Les coefficients de la fonction de transfert de ce modèle de synthèse/nominal sont typiquement obtenus à l'issue d'une phase d'identification paramétrique, ayant en particulier permis de déterminer la valeur de l'inertie du système mécatronique à commander ou à tout le moins de fournir une information sur cette inertie.

On verra que ce qualificatif « nominal » s'oppose au qualificatif « effectif » qui est utilisé pour qualifier des éléments obtenus en utilisant le système mécatronique réel.

La restriction à une représentation/modélisation linéaire se justifie par la simplicité qu'elle procure, même si cela se fait au prix d'une approximation par rapport au système physique réel.

Ainsi, la fonction de transfert du modèle de synthèse de la représentation/modélisation d'un système mécatronique dont la variable mesurée et contrôlée est la vitesse peut s'écrire :

$$V(t) = \frac{K_{am}}{Js+f}U(t) \qquad\qquad \text{[M1]}$$

où $J$ est l'inertie ou la masse du système, $f$ un coefficient de frottement visqueux, et $K_{am}$ un gain modélisant la constante de couple ou force du moteur, ainsi que le gain de l'amplificateur et de l'étage d'électronique de puissance associé au moteur.

Dans l'hypothèse où la variable mesurée et contrôlée est la position, la fonction de transfert correspondante du modèle de synthèse s'écrit du fait de l'ajout d'un intégrateur :

$$P(t) = \frac{1}{s}\frac{K_{am}}{Js+f}U(t) \qquad\qquad \text{[M2]}$$

En pratique, dans bien des cas, lors de la synthèse de correcteurs, on se contente de modèles encore plus simples, où le coefficient de frottements visqueux $f$ est négligé. Sous cette dernière hypothèse, les fonctions de transfert des modèles de synthèse/nominaux, s'écrivent simplement :

$$V(t) = \frac{K_{am}}{Js}U(t) = \frac{b}{s}U(t) \qquad\qquad \text{[M3]}$$

et :

$$P(t) = \frac{K_{am}}{Js^2}U(t) = \frac{b}{s^2}U(t) \qquad\qquad \text{[M4]}$$

Avec : $b = \dfrac{K_{am}}{J}$ .

De tels modèles de synthèse/nominaux, pourtant minimalistes, n'en sont pas moins suffisants afin de synthétiser des correcteurs simples.

Dans ce qui suit, on suppose que pour un système à asservir donné, le coefficient *b* est connu avec une bonne précision. L'obtention de sa valeur se faisant le plus souvent au moyen d'une procédure d'identification.

Si l'on travaille en temps continu pour la synthèse du correcteur, à partir des fonctions de transfert des modèles de synthèses/nominaux [M3] et [M4] simple et double intégrateur, il est possible en simulation d'obtenir des performances aussi élevées que l'on veut, c'est-à-dire avec la MRC aussi petite que souhaité, pour une valeur de la marge de module fixée, MMC par exemple égale à 0,5. Pour mémoire, la marge de module est la distance du lieu de la boucle ouverte corrigée par rapport au point -1 dans le plan de Nyquist.

Si dans la pratique, les performances du correcteur sont nécessairement limitées, c'est simplement du fait que, d'une part, le correcteur finalement réalisé et implanté est à temps discret (échantillonnage temporel) et qu'il y a en général des retards mineurs dans la boucle, notamment dus au temps de transfert de l'information, et, d'autre part, que le système réel s'écarte du modèle par la présence de résonances en hautes fréquences. La valeur de la marge de retard d'un correcteur sur un des modèles nominaux [M3] et [M4] peut-être, pour un niveau de marge de module fixé, considéré comme un indicateur des performances du correcteur du point de vue du rejet des perturbations.

Aussi, est-il parfaitement possible pour chacune des fonctions de transfert des deux modèles nominaux [M3] et [M4] de synthétiser un ensemble de correcteurs pour de nombreux niveaux de performances, c'est-à-dire, en pratique, pour de nombreuses valeurs de MRC, et de calculer préalablement et tabuler les coefficients de bas niveau obtenus pour les correcteurs en fonction des valeurs de MRC. Cela permet, pour une fonction de transfert donnée d'un modèle nominal [M3] ou [M4], d'avoir un continuum de coefficients précalculés de correcteurs et qui sont indexés sur les niveaux de performance, en pratique des valeurs de MRC. Dans certains cas, il n'est même pas nécessaire d'avoir recours à des tabulations obtenues par des calculs préalable (hors ligne), lesdits coefficients de bas niveau pouvant parfois s'obtenir directement par le calcul en temps réel pour un/des niveaux de performance donnés.

Toutefois, sauf à faire des expérimentations sur le système réel asservi pour chaque correcteur synthétisé à une valeur de MRC donnée, on ne saura pas lequel des correcteurs présente effectivement le meilleur compromis entre la performance et la robustesse

On va maintenant décrire des moyens qui permettent une optimisation automatisée ne nécessitant pas d'être réalisée par un technicien spécialisé en automatique

Dans ce qui suit, on a recours au concept de fonction de sensibilité directe et de fonction de sensibilité complémentaire, que l'on rappelle brièvement. Si l'on note $C(s)$ la fonction de transfert du correcteur en temps continu, et $G(s)$ la fonction de transfert du système à commander, la fonction de sensibilité directe $S_{yp}(s)$ est par définition :

$$S_{yp}(s) = \frac{1}{1+C(s)G(s)} \qquad\qquad [F5]$$

On montre facilement que sa norme $H_\infty$, c'est-à-dire que le maximum de son module sur l'ensemble des fréquences, est égale à l'inverse de la marge de module.

La fonction de sensibilité complémentaire notée ici $T_{yp}(s)$, ainsi dénommée car l'on a la relation $T_{yp}(s) = 1 - S_{yp}(s)$, s'écrit :

$$T_{yp}(s) = \frac{C(s)G(s)}{1+C(s)G(s)} \qquad\qquad [F6]$$

En référence à la Figure 1, la fonction de sensibilité directe correspond à la fonction de transfert entre le signal d'excitation w(t) qui est une perturbation additive introduite en sortie du correcteur $C(s)$ et le signal $v(t)$ qui est le signal produit par le sommateur $(v(t) = U(t)+w(t))$. La fonction de sensibilité complémentaire est quant à elle la fonction de transfert entre les signaux w(t) et $U(t)$, ce dernier signal $U(t)$ étant la commande issue du correcteur.

On peut remarquer dans la configuration de boucle de la Figure 1 qu'il est aisé de créer et de modifier la perturbation additive puisque ce signal w(t) se situe dans la partie logicielle de la boucle. Aussi, en créant une perturbation correspondant à w(t), on peut estimer indirectement les fonctions de sensibilité directe et complémentaire effectives.

Dans ce qui suit, on dénomme $G_o(s)$ la fonction de transfert du système nominal correspondant aux équations [M3] et [M4], alors que l'on nomme $G(s)$ la véritable fonction de transfert du système réel à commander, $G_o(s)$ n'en étant qu'une approximation, et $G(s)$, encore appelée fonction de transfert effective du système, étant inconnue. Cela amène à définir la fonction de sensibilité directe nominale $S_{yp0}(s)$ et la fonction de sensibilité complémentaire nominale $T_{yp0}(s)$ correspondant à l'asservissement du système nominal par le correcteur. Ces fonctions de sensibilité nominales correspondent respectivement à :

$$S_{yp0}(s) = \frac{1}{1+C(s)G_0(s)} \qquad\qquad \text{[F7]}$$

$$T_{yp0}(s) = \frac{C(s)G_0(s)}{1+C(s)G_0(s)} \qquad\qquad \text{[F8]}$$

Au vu de la figure 1, on remarque qu'il est possible de créer une excitation logicielle correspondant à w(t) dans le calculateur réalisant en temps réel l'asservissement du système physique. Ainsi en récupérant le signal w(t) effectivement injecté en ce point de la boucle sur le système réel sur lequel le calculateur opère avec le correcteur (donc pas sur un système simulé/de synthèse) ainsi que les signaux v(t) et U(t), il est possible de les analyser pour en déduire, par exemple par une procédure d'identification, les fonctions de sensibilité effectives $S_{yp}(s)$ et $T_{yp}(s)$. C'est cette propriété qui est mise à profit dans la présente invention, afin d'optimiser l'asservissement.

En effet, les fonctions de sensibilité effectives $S_{yp}(s)$ et $T_{yp}(s)$ correspondant au système réel, sont différentes des fonctions de sensibilité nominales, du fait que la fonction de transfert effective du système $G(s)$ (qui correspond au système réel) est différente de la fonction de transfert nominale $G_0(s)$ utilisée pour la synthèse du correcteur.

On a signalé plus haut que la fonction de sensibilité directe permet de retrouver indirectement la marge de module de l'asservissement. Ainsi l'analyse de la fonction de sensibilité directe effective (donc avec le système réel) par injection d'un signal additif w(t), permet d'estimer la marge de module effective de l'asservissement, cette dernière étant très probablement plus faible que la marge de module nominale établie avec un modèle simplifié du système en simulation à partir de $S_{yp0}(s)$.

Si l'on se restreint à un domaine linéaire, les incertitudes affectant la fonction de transfert du modèle de synthèse peuvent être rangées en deux catégories :

- Les incertitudes structurées, dues par exemple aux variations paramétriques du modèle de base (par exemple, ici, des variations d'inertie). On suppose dans ce qui suit, que de telles incertitudes sont négligeables du fait d'une identification préalable ayant permis de déterminer les paramètres du modèle nominal.
- Les incertitudes non structurées, qui correspondent à des dynamiques mineures existant sur le système, et qui ne sont pas prises en compte dans la fonction de transfert du modèle de synthèse $G_0(s)$. Comme évoqué plus haut, elles se subdivisent en deux catégories :

    * Celles qui induisent un déphasage ou un retard (par exemple dynamique de l'actionneur ou du capteur, retard dans la transmission de l'information...)
    * Celles qui découlent de l'apparition de modes résonants en haute fréquence, dus généralement à la raideur non infinie des éléments constituant le système mécanique à commander.

Si l'on considère que les incertitudes structurées sont négligeables du fait de l'identification préalable ayant permis leur prise en compte au moins partielle dans les paramètres identifiés du modèle nominal du système, alors la limite des performances de l'asservissement provient de ces incertitudes non structurées.

La marge de module est un indicateur global de la robustesse d'un système bouclé, et on a vu plus haut qu'on peut la déterminer à partir du module de la fonction de sensibilité directe $S_{yp}(s)$ (la norme $H_\infty$ de la fonction de sensibilité directe $S_{yp}(s)$ est égale à l'inverse de la marge de module).

Il existe également d'autres indicateurs de robustesse et qui sont établis à partir de la fonction de sensibilité complémentaire :

- La marge de module complémentaire, ou marge statique, $M_{st}$, qui est l'inverse de la norme $H_\infty$ de la fonction de sensibilité complémentaire :

$$M_{st} = \frac{1}{\max\limits_{\omega}\left|T_{yp}(j\omega)\right|}$$

- La marge dynamique $M_{dyn}$ (définie par Ph. De Larminat dans « Automatique appliquée » éditions Hermès, 2009), destinée à garantir la stabilité de la boucle en cas d'incertitudes relatives sur la fonction de transfert de la boucle ouverte. Cette marge qui généralise la marge de retard et dont l'unité est la seconde, s'écrit :

$$M_{dyn} = \frac{1}{\max\limits_{\omega}\left|\omega T_{yp}(j\omega)\right|}$$

Afin de mettre en place la procédure de réglage de l'asservissement, il est nécessaire de distinguer :

- la marge de retard cible/nominale et la marge de module cible/nominale, obtenues en simulation à partir du modèle de synthèse $G_0(s)$, et
- la marge statique nominale $M_{st0}$ (= marge de module complémentaire nominale) et la marge dynamique nominale $M_{dyn0}$, également obtenues en simulation à partir du modèle nominal $G_0(s)$, et
- la marge statique effective $M_{st}$ et la marge dynamique effective $M_{dyn}$ qui peuvent être obtenues expérimentalement par une estimation de la fonction de sensibilité complémentaire effective $T_{yp}(s)$ obtenue par exemple au moyen d'une procédure d'identification sur le système asservi bouclé réel avec son correcteur.

Pour un faible niveau de performances de l'asservissement, ce qui est équivalent à avoir une MRC élevée, les marges statique et dynamique effectives sont très proches des marges statique et dynamique nominales. Au contraire, plus les performances nominales de l'asservissement sont élevées, c'est-à-dire plus la MRC est faible, et plus les dynamiques mineures dues aux incertitudes non structurées, vont devenir critiques pour la stabilité de la boucle, ce qui signifie que les marges statique et dynamique effectives décroissent, et il finit par exister un niveau de performances nominales maximum pour lesquelles la boucle n'est plus stable.

Dans ces conditions, on va considérer que le meilleur asservissement pour un système donné avec une inertie déterminée/connue est celui qui possède les performances nominales les plus élevées possibles, tout en garantissant des marges statique et dynamique effectives suffisantes. En d'autres termes, il s'agit de trouver, pour une structure de correcteur donnée, le meilleur compromis entre la performance et la robustesse par rapport aux incertitudes du modèle

Jusqu'à présent, la recherche d'un correcteur satisfaisant nécessitait un travail de préparation et, en particulier dans le cadre de la mise en œuvre de l'invention de la demande de brevet WO2006/131664 précitée, dans le but de régler le correcteur notamment au regard de la marge de retard cible MRC mais sans toutefois pouvoir optimiser d'une manière simple et exploitable ce correcteur.

La présente invention vise plus particulièrement à automatiser la phase de recherche du coefficient MRC permettant d'obtenir d'une manière simple le correcteur ayant le meilleur compromis entre la performance et la robustesse par rapport aux incertitudes du modèle nominal.

Cette phase de recherche automatisée s'appuie sur l'évaluation de deux indicateurs dérivés des marges statique et dynamique effectives. Ces deux indicateurs sont :

- L'indicateur statique effectif noté $Ind_s$ qui est la marge de module complémentaire effective ou marge statique effective, $M_{st}$, qui est l'inverse de la norme $H_\infty$ de la fonction de sensibilité complémentaire effective, et
- L'indicateur dynamique effectif noté $Ind_d$.

Dans un premier mode de réalisation, l'indicateur dynamique effectif $Ind_d$ est le rapport de la marge dynamique effective $M_{dyn}$ sur la marge de retard nominale MRC, soit : $Ind_d = \dfrac{M_{dyn}}{MRC}$ .

Dans un second mode de réalisation, l'indicateur dynamique effectif $Ind_d$ est le rapport de la marge dynamique effective $M_{dyn}$ sur la marge dynamique nominale $M_{dyn0}$, soit : $Ind_d = \dfrac{M_{dyn}}{M_{dyn0}}$ .

Les deux indicateurs sont donc sans unités.

Un correcteur sera considéré comme optimal si :

- Il a une marge de retard cible/nominale MRC la plus faible possible, ce qui correspond à une performance élevée,
- tout en maintenant les deux indicateurs effectifs de robustesse satisfaisante au regard de la stabilité $Ind_s$ et $Ind_D$ au-delà de seuils prédéfinis.

Dans la suite, on note le seuil sur l'indicateur statique effectif $Ind_s$, par $S_s$, et de façon similaire, on note le seuil sur l'indicateur dynamique effectif $Ind_D$ par $S_D$.

Si pour un correcteur, la marge de retard nominale et la marge dynamique nominale sont connues à priori du fait qu'ils résultent notamment d'une simulation, les marges statique et dynamique effective, et donc les indicateurs effectifs associés, ne peuvent être obtenus que par une caractérisation de la boucle fermée réelle munie du correcteur que l'on cherche à tester.

La détermination des indicateurs statique et dynamique effectifs, pour un correcteur donné, s'effectue par excitation avec un signal perturbateur w(t) de la boucle fermée sur le système réel et munie du correcteur à tester. Si la grandeur asservie est la position pour une boucle à correcteur de position, alors on utilise une consigne de position qui est, de préférence, choisie constante. Si la grandeur asservie est la vitesse pour une boucle à correcteur de vitesse, alors on utilise une consigne de vitesse qui peut être choisie constante ou, de préférence, choisie nulle.

A noter que ci-dessus, on a associé une consigne qui est de même type que la grandeur asservie et que celle traitée par le correcteur, c'est-à-dire, pour par exemple une grandeur de type vitesse et un correcteur de vitesse, une consigne de vitesse. On comprend cependant qu'il est possible d'utiliser des types différents (vitesse, position, pour la grandeur asservie, le correcteur et la consigne au sein de la boucle du fait que ces types peuvent se déduire les uns des autres par des opérations mathématiques ou être produits par des capteurs, notamment par dérivation

L'excitation est produite par l'injection d'un signal perturbateur large bande au point w(t) dans la figure 1. Ce signal perturbateur large bande peut être obtenu par exemple par un générateur de bruit blanc, ou encore, et de préférence, par la génération d'une séquence binaire pseudo aléatoire (SBPA) qui présente l'avantage d'être très facile à implémenter dans un calculateur, et qui possède des caractéristiques spectrale proches de celles d'un bruit blanc.

La caractérisation proprement dite du système mécatronique réel se fait par l'acquisition (en fait l'utilisation car le signal excitateur injecté dans la boucle est calculé tout comme le signal de sortie du correcteur) du signal excitateur w(t) et du signal de sortie du correcteur $U(t)$ durant un espace de temps de quelques secondes. Les résultats calculés, qui sont donc obtenus à partir de données du système mécatronique réel, sont donc des résultats effectifs. Les signaux w(t) et $U(t)$ sont ensuite, soit :

- Dans un premier mode de réalisation, traités en ligne (= temps réel) au moyen d'un algorithme d'identification récursif qui peut être un algorithme d'identification paramétrique permettant l'estimation d'une fonction de transfert entre les points de la boucle w(t) et U(t), cette fonction de transfert correspondant à la fonction de sensibilité complémentaire effective. Concernant les algorithmes d'identification récursifs on peut se référer à l'ouvrage « Commande des systèmes » de Ioan Doré Landau, édition Hermès 2002. Une fois que cette fonction de transfert effective $T_{yp}(\omega)$ a été obtenue dans le domaine fréquentiel (fréquence $\omega$), on en calcule son module $|T_{yp}(\omega)|$ et le module de son produit avec la fréquence $|\omega T_{yp}(\omega)|$, afin de déterminer les marges statique $M_{st} = \frac{1}{\max_\omega |T_{yp}(j\omega)|}$ et dynamique $M_{dyn} = \frac{1}{\max_\omega |\omega T_{yp}(j\omega)|}$ effectives, et à la suite les indicateurs statiques et dynamiques effectifs.

- Dans un second mode de réalisation, l'estimation du module de la fonction de sensibilité complémentaire se fait également en ligne (= temps réel), par une méthode non paramétrique, par identification spectrale, en utilisant, par exemple, l'algorithme dit « sliding dft » (transformée de Fourier discrète glissante) que l'on applique aux signaux w(t) et $U(t)$. La densité spectrale de puissance de la fonction de sensibilité complémentaire correspond au rapport des densité spectrale de puissance des signaux précités w(t) et $U(t)$. Dans une variante, si le spectre du signal excitateur w(t) est connu à priori, on peut se contenter de n'estimer que le spectre de $U(t)$. En tout état de cause, une fois le spectre de la fonction de sensibilité complémentaire obtenu, on déduit facilement son module puis les marges et indicateurs statiques et dynamiques effectifs.

- Dans un troisième mode de réalisation, l'estimation du module de la fonction de sensibilité complémentaire se fait par un post-traitement des acquisitions des signaux w(t) et $U(t)$ au moyen d'un algorithme d'identification paramétrique fonctionnant hors ligne. A cette fin on peut se référer à ce sujet à l'ouvrage : Identification theory for the user de Lennardt Ljung, Prentice Hall, 1999. Là encore, la fonction de de sensibilité complémentaire obtenue, on en extrait son module et on en déduit les marges et indicateurs statiques et dynamiques effectifs.

- Dans un quatrième mode de réalisation, l'estimation du module de la fonction de sensibilité complémentaire se fait par un post-traitement des acquisitions des signaux w(t) et $U(t)$ au moyen d'un algorithme d'identification non paramétrique, par identification spectrale, en utilisant, par exemple, l'algorithme dit « sliding dft » (transformée de Fourier discrète glissante). On peut également se référer à l'ouvrage de Ljung à ce sujet. Comme précédemment, on extrait ensuite le module de la fonction de sensibilité complémentaire et on en déduit les marges et indicateurs statiques et dynamiques effectifs.

A noter que du fait qu'il y a au moins deux modes de calcul de l'indicateur dynamique effectif $Ind_d$, soit $Ind_d = \frac{M_{dyn}}{MRC}$, soit $Ind_d = \frac{M_{dyn}}{M_{dyn0}}$, des calculs complémentaires peuvent être nécessaires pour obtenir les éventuels paramètres nominaux utilisés comme la marge dynamique nominale $M_{dyn0}$ dans le deuxième mode.

On doit signaler que des méthodes ont été proposées dans la littérature pour déterminer la marge de module et la marge de module complémentaire sans avoir recours à une procédure d'identification et, en particulier, en mettant en œuvre des relais dans la boucle. On peut notamment citer l'article : « Closed-loop estimation of robustness margins by the relay method », dont les auteurs sont R. Longchamp et Y. Piguet (IEEE American control conférence proceedings pp 3687-2691- 1995). Malheureusement cette méthode n'est pas directement utilisable dans le cadre de la présente invention, car la marge dynamique ne peut pas être obtenue au moyen de la méthode divulguée dans ce document.

De même, il existe des méthodes itératives de réglage de correcteurs PID visant à faire coïncider au mieux une marge de module effective à une marge de module désirée, ainsi que des marges de gain et de phases effectives par rapport à des marges de gain et phase désirée. On peut citer à ce sujet l'article : « Robust PID tuning with spécification on modulus margin » dont les auteurs sont D. Garcia, A. Karimi, R. Longchamp (proceedings of the IEEE American control conference, 2004). L'invention présentée ici s'en distingue par le fait qu'elle vise à trouver le correcteur le plus performant tout en maintenant au-dessus d'un seuil non seulement la marge de module complémentaire (marge statique) effective, mais aussi au-dessus d'un seuil la marge dynamique effective. Or dans le cadre de systèmes mécaniques susceptibles de comporter des modes résonants peu amortis, la validation de la marge dynamique effective se révèle cruciale.

Quel que soit le mode de réalisation aboutissant à l'obtention des indicateurs statique et dynamique effectifs, on compare ensuite ces deux indicateurs effectifs par rapport aux deux seuils $S_s$ et $S_D$ : si chacun des deux indicateurs effectifs est au-dessus de son seuil correspondant, c'est-à-dire supérieur à ce seuil, alors le correcteur testé peut être considéré comme un correcteur admissible, c'est-à-dire qu'il confère à la boucle une robustesse par rapport à la stabilité qui est suffisante. Toutefois, cela ne signifie pas pour autant que ce correcteur soit optimal car il peut exister d'autres correcteurs plus performants dont les indicateurs sont également au-dessus desdits seuils.

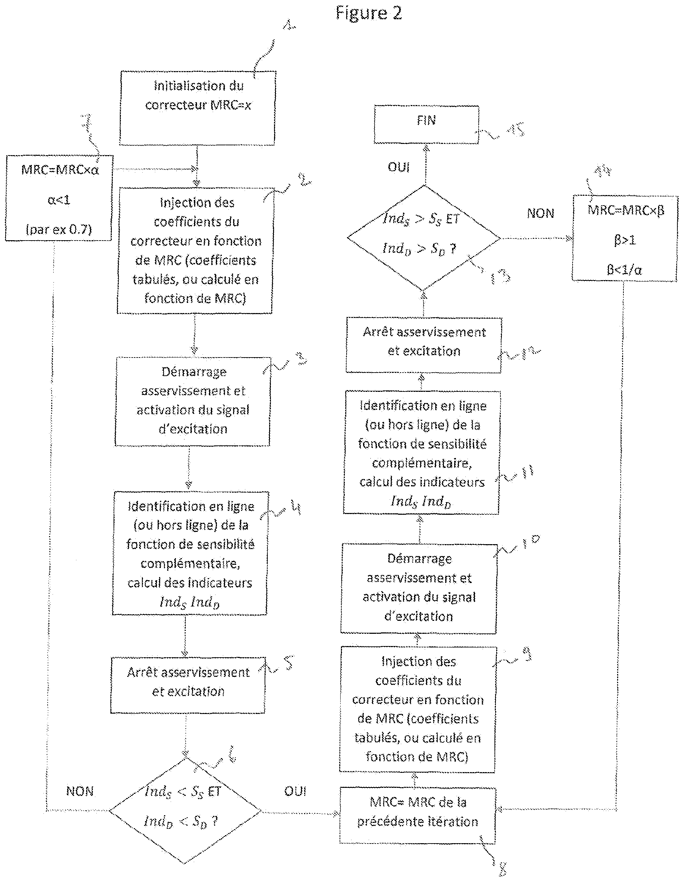

La satisfaction des critères de robustesse selon le principe décrit ci-dessus permet d'envisager la recherche ultérieure d'un correcteur qui soit en outre plus performant sur la base de la marge de retard (MRC). Une procédure itérative peut être utilisée afin de déterminer le correcteur qui soit à la fois le plus performant et dont les indicateurs sont au-dessus des seuils $S_s$ et $S_D$. Une telle procédure itérative est décrite à la suite et en relation avec l'organigramme de la Figure 2. On notera toutefois que cet organigramme est exemplatif car plusieurs variantes de ladite procédure itérative sont possibles pour obtenir le correcteur optimal.

A l'étape 1 de la figure 2, on initialise la variable de marge de retard MRC à une valeur déterminée, par exemple quelques dizaines de millisecondes Cette marge de retard qui devient la marge de retard courante va évoluer au cours des itérations comme on va le voir.

A l'étape 2, on calcule un correcteur ayant une marge de retard MRC égale à la marge de retard courante, cette dernière étant égale à x lors du premier passage à cette étape. En variante dans laquelle on a préalablement calculé des correcteurs pour diverses valeurs de marge de retard, on se contente de récupérer un correcteur précalculé qui a une marge de retard correspondant à la marge de retard courante. Dans ce dernier cas, on peut utiliser un correcteur précalculé ayant une marge de retard approchant la marge de retard courante. Grâce à ce correcteur calculé ou récupéré, on dispose des coefficients de bas niveau du correcteur et ce dernier peut être implémenté dans le calculateur pour traiter les signaux de la boucle de rétroaction de l'asservissement sur le système mécatronique réel.

A l'étape 3, les coefficients de bas niveau ayant été implémentés dans le calculateur de la boucle de rétroaction de l'asservissement sur le système mécatronique réel on démarre l'asservissement pour tester le correcteur en imposant une consigne, par exemple une valeur constante de position ou de vitesse, et on fait injecter par le calculateur le signal d'excitation, typiquement un bruit blanc, qui est additionné au signal de sortie du correcteur pour commander le système mécatronique réel.

A l'étape 4, on évalue les deux indicateurs effectifs $Ind_s$ et $Ind_D$ sur la base de la fonction de sensibilité complémentaire effective $T_{yp}(s)$. Cette étape peut s'effectuer pendant le test (en ligne), c'est-à-dire pendant le fonctionnement de l'asservissement, ou juste après ou ultérieurement (hors ligne), des mesures ayant été enregistrées à cette dernière fin.

A l'étape 5, on arrête l'asservissement et donc le test.

A l'étape 6 on effectue deux comparaisons des deux indicateurs effectifs $Ind_s$ et $Ind_D$ par rapport à leurs deux seuils respectifs $S_s$ et $S_D$. Si les deux indicateurs sont tous deux inférieurs à leurs seuils respectifs alors, par la branche NON, on reboucle sur l'étape 2 en faisant évoluer à l'étape 7 la marge de retard. Dans le cas contraire, branche OUI, on passe à l'étape 8.

A l'étape 7, on réduit la marge de retard par multiplication par un facteur $\alpha$ inférieur à 1 et par exemple égale à 0,7. La marge de retard courante est donc réduite, ce qui correspond à une performance plus élevée. Dans des variantes, on procède à cette réduction par décrémentation d'un facteur égal ou supérieur à 1.

A l'étape 8 on reprend la marge de retard courante correspondant à celle du dernier passage de l'étape 6 ayant abouti au passage par la branche OUI et dans le cas où le branchement viendrait de l'étape 14, celle produite à l'étape 14 que l'on décrira plus loin.

Les étapes 9, 10, 11 et 12 sont similaires respectivement aux étapes 2, 3, 4 et 5 déjà vues.

A l'étape 13 on effectue deux comparaisons des deux indicateurs effectifs $Ind_s$ et $Ind_D$ par rapport à leurs deux seuils respectifs $S_s$ et $S_D$. Si les deux indicateurs sont tous deux supérieurs à leurs seuils respectifs alors, par la branche OUI, on termine les itérations et on a obtenu le correcteur optimal. Dans le cas contraire, branche NON, on passe à l'étape 14 pour ensuite reboucler à l'étape 8.

L'étape 14 permet d'augmenter la marge de retard courante et donc de réduire la performance. Pour cela, la marge de retard courante est multipliée par un facteur $\beta$ de valeur supérieure à 1 et inférieure à 1/$\alpha$ afin de produire une nouvelle marge de retard qui sera utilisée lors du rebouclage aux étapes 8 à 12 puis 13.

On doit noter en relation avec la figure 2 que la marge de retard MRC que l'on fait évoluer dans les itérations, évolue par pas/sauts du fait des multiplications et divisions possibles de sa valeur. Il en résulte que le correcteur le plus performant, dit optimal, obtenu est relatif à ces pas/sauts. On peut en particulier envisager que l'évolution de la marge de retard se fasse par incrémentation et décrémentation d'une valeur de pas que l'on pourra choisir.

On doit aussi noter que le correcteur le plus performant, dit optimal, obtenu dépend des correcteurs qui ont initialement été déterminés avant les tests (hors ligne ou en ligne) en fonction de la marge de module et de la marge de retard sur la boucle de rétroaction appliquée à la fonction de transfert nominale : c'est parmi ces correcteurs que l'optimal peut être trouvé. Cet optimal est donc relatif. En fonction de l'exhaustivité ou non des correcteurs initialement déterminés l'optimal sera plus ou moins proche d'un optimal absolu.

Ainsi, l'invention permet l'obtention du correcteur qui présente le meilleur compromis entre la performance et la robustesse, et cela se fait de façon itérative au moyen d'évaluations successives sur le système mécatronique réel d'indicateurs statique et dynamique avec des correcteurs ayant des performances différentes résultant de marges de retard MRC différentes et ayant été obtenus à partir du modèle du système mécatronique donc à partir de la fonction de transfert nominale.

Plus précisément, le procédé et le dispositif d'optimisation du compromis entre la performance et la robustesse des asservissements d'un système mécatronique qui peut être représenté par un modèle nominal de type intégrateur ou double intégrateur et dont les coefficients de bas niveau de l'asservissement sont supposés être paramétrés, au moyen de tables ou de formules de calcul, à partir d'un indicateur de robustesse globale de l'asservissement sur le modèle nominal, la marge de module MMC en l'espèce, et également à partir d'un indicateur de performances de l'asservissement sur le modèle nominal, la marge de retard MRC en l'espèce, et dont le ou les coefficients du modèle nominal sont supposés connus, mettent en œuvre les moyens suivants : pour un correcteur de performances nominales données, on identifie la fonction de sensibilité complémentaire effective et l'on en extrait un indicateur statique effectif et un indicateur dynamique effectif, représentatif de la robustesse de l'asservissement par rapport aux incertitudes non structurées, et on compare ces indicateurs par rapports à des seuils prédéfinis. L'identification du module de la fonction de sensibilité complémentaire peut se faire suivant plusieurs modes de réalisation : identification en ligne ou hors ligne et identification de type paramétrique ou de type non paramétrique. L'indicateur statique effectif correspond à la marge de module complémentaire, l'indicateur dynamique effectif correspond soit au rapport de la marge dynamique effective par rapport à la marge de retard nominale, soit au rapport de la marge dynamique effective par rapport à la marge dynamique nominale.

Des mises en œuvre du procédé selon l'invention montrent qu'il est possible d'obtenir rapidement les paramètres du correcteur et que les résultats sont reproductibles.

Bien que l'invention ait été décrite en référence à un organigramme particulier, elle n'est nullement limitée à une mise en œuvre selon cet organigramme. Elle comprend tous les équivalents techniques des moyens décrits ainsi que leurs combinaisons qui entrent dans le cadre de l'invention telle que définie dans les revendications. Par exemple, le procédé de l'invention peut en outre prendre en compte des contraintes particulières comme par exemple une vitesse minimale et/ou maximale d'un organe du système mécatronique, une accélération maximale, une excursion maximale notamment dans le cas d'un asservissement en position, etc. Le procédé selon l'invention peut par exemple s'appliquer au cas de dispositifs mécatroniques permettant aussi bien des mouvements en rotation selon un ou plusieurs axes, en translation selon un ou plusieurs axes ou la combinaison de mouvements de rotation et de translation. En outre, l'invention peut s'appliquer à tout type de système mécatronique asservis avec un correcteur et notamment à un simulateur de mouvements qui est un ensemble comportant un dispositif mécatronique et des unités électroniques et logicielles de contrôle du dispositif mécatronique. De plus, elle peut s'appliquer à des systèmes comportant des organes actionneurs autres qu'électriques, et par exemple des actionneurs pneumatiques, hydrauliques, et des combinaisons de ces divers types d'actionneurs, en d'autres termes l'invention s'applique à tout système mécatronique asservi dans une boucle de rétroaction avec un correcteur.

**Revendications**

**1.** Procédé d'optimisation automatisé d'un asservissement d'un système mécatronique réel commandé par une consigne Y$_c$(t), ledit asservissement comportant un correcteur C linéaire dans une boucle de rétroaction incluant le système mécatronique G, le correcteur étant défini par des paramètres de correcteur, le système mécatronique réel G ayant été modélisé par une fonction de transfert dite fonction de transfert nominale G$_o$ entre une commande U(t) d'entrée et une variable de sortie Y(t) mesurée pour asservissement, l'asservissement étant **caractérisé par** une robustesse par rapport aux incertitudes structurées et non structurées du système mécatronique et une performance déterminables, dans lequel procédé et en utilisant la fonction de transfert nominale, on détermine des paramètres de correcteur assurant à la commande un compromis entre la performance et la robustesse satisfaisant, la robustesse de la boucle appliquée à la fonction de transfert nominale étant dépendante d'une marge de module MMC, la performance de la boucle appliquée à la fonction de transfert nominale étant dépendante d'une marge de retard MRC, par une procédure itérative, on détermine parmi les correcteurs ayant un compromis entre la performance et la robustesse satisfaisant, le correcteur le plus performant, dit optimal, **caractérisé en ce que** ladite procédure itérative consiste à faire évoluer une valeur courante de la marge de retard MRC pour une même marge de module MMC, et à tester individuellement le ou les correcteurs ayant marge de retard MRC correspondant à la valeur courante sur l'asservissement du système mécatronique réel et en injectant dans la boucle un signal d'excitation w(t) et à évaluer deux indicateurs effectifs basés sur au moins une marge statique effective M$_{st}$ et une marge dynamique effective M$_{dyn}$, la marge statique effective M$_{st}$ caractérisant la robustesse globale de la boucle par rapport aux incertitudes structurées et non structurées, et la marge dynamique effective M$_{dyn}$ caractérisant la robustesse de la boucle par rapport aux incertitudes non structurées, les deux indicateurs effectifs étant :

- un indicateur statique effectif Ind$_s$ qui est la marge statique effective M$_{st}$ et
- un indicateur dynamique effectif Ind$_D$ qui est une fonction directe de la marge dynamique effective M$_{dyn}$, la procédure itérative étant arrêtée sur un correcteur, qui est alors le correcteur optimal, lorsque les deux indicateurs effectifs Ind$_s$ et Ind$_D$ deviennent supérieurs à des seuils respectifs S$_s$ et S$_D$ déterminés pour une valeur courante de marge de retard nominale MRC la plus faible possible pour un même niveau de marge de module nominale MMC, et donc pour la plus grande performance.

**2.** Procédé selon la revendication 1, **caractérisé en ce que** lors de chaque évaluation, on estime une fonction de sensibilité complémentaire effective T$_{yp}$(s) et on calcule les deux indicateurs effectifs Ind$_s$ et Ind$_D$ à partir de ladite fonction de sensibilité complémentaire effective T$_{yp}$(s), l'indicateur statique effectif Ind$_s$ étant la marge statique effective M$_{st}$ qui est égale à l'inverse de la norme H$_∞$ de la fonction de sensibilité complémentaire effective :

$$M_{st} = \frac{1}{\max_\omega |T_{yp}(j\omega)|},$$

et l'indicateur dynamique effectif Ind$_D$ étant un rapport entre, au numérateur, la marge dynamique effective M$_{dyn}$ et, au dénominateur, un paramètre choisi parmi la marge de retard nominale MRC et la marge dynamique nominale M$_{dyn0}$,

la marge dynamique effective M$_{dyn}$ étant égale à l'inverse du maximum du gain du produit de la fonction de sensibilité complémentaire effective par la fréquence $\omega$ :

$$M_{dyn} = \frac{1}{\max_\omega |\omega T_{yp}(j\omega)|},$$

la marge de retard nominale MRC et la marge dynamique nominale M$_{dyn0}$ étant obtenues par calcul sur la boucle appliquée à la fonction de transfert nominale.

**3.** Procédé selon la revendication 1 ou la revendication 2, **caractérisé en ce que** la fonction de transfert nominale du système mécatronique est une fonction à simple intégrateur ou à double intégrateur.

**4.** Procédé selon l'une quelconque des revendications précédentes, **caractérisé en ce que** le signal d'excitation est calculé et est sensiblement un bruit blanc.

**5.** Procédé selon l'une quelconque des revendications précédentes, **caractérisé en ce qu'**on estime la fonction de sensibilité complémentaire effective T$_{yp}$(s) par une méthode d'identification, ladite méthode d'identification étant choisie parmi les méthodes suivantes :

- méthode d'identification récursive en temps réel, de préférence par une méthode d'identification paramétrique,
- méthode d'identification non paramétrique par identification spectrale, notamment par utilisation d'une transformée de Fourier discrète glissante.

**6.** Procédé selon la revendication 5, **caractérisé en ce que** la méthode d'identification est mise en œuvre en temps réel ou en temps différé.

**7.** Procédé selon l'une quelconque des revendications précédentes, **caractérisé en ce qu'**on met en œuvre au sein de la boucle de rétroaction un calculateur, ledit calculateur comportant une partie de calcul de correction correspondant au correcteur C, le correcteur C recevant en entrée ou utilisant un signal résultant de la différence effectuée par le calculateur entre la consigne $Y_c(t)$ et la variable de sortie Y(t) mesurée pour asservissement et produisant en sortie un signal de commande U(t), ledit calculateur étant en outre configuré pour que lors des tests, le signal d'excitation w(t) soit ajouté au signal de commande avant envoi au système mécatronique G.

**8.** Dispositif d'asservissement d'un système mécatronique réel commandé par une consigne $Y_c(t)$, ledit asservissement comportant un correcteur C linéaire dans une boucle de rétroaction incluant le système mécatronique G, le correcteur étant défini par des paramètres de correcteur, le système mécatronique réel G pouvant être modélisé par une fonction de transfert dite fonction de transfert nominale $G_o$ entre une commande U(t) d'entrée et une variable de sortie Y(t) mesurée pour asservissement, l'asservissement étant **caractérisé par** une robustesse par rapport aux incertitudes structurées et non structurées du système mécatronique et une performance déterminables,

**caractérisé en ce qu'**il comporte un calculateur configuré pour l'exécution du procédé d'optimisation automatisé de l'une quelconque des revendications précédentes et

dans lequel lors de tests sur le système mécatronique réel le calculateur assure l'asservissement par un traitement de signaux par un correcteur testé, le correcteur testé C recevant en entrée ou utilisant un signal résultant de la différence effectuée par le calculateur entre la consigne $Y_c(t)$ et la variable de sortie Y(t) mesurée pour asservissement et produisant en sortie un signal de commande U(t), ledit calculateur étant en outre configuré pour que lors des tests, un signal d'excitation w(t) soit ajouté au signal de commande avant envoi au système mécatronique G.

**9.** Dispositif d'asservissement selon la revendication 8, **caractérisé en ce que** le calculateur est en outre configuré pour évaluer deux indicateurs effectifs basés sur au moins une marge statique effective $M_{st}$ et une marge dynamique effective $M_{dyn}$, la marge statique effective $M_{st}$ caractérisant la robustesse globale de la boucle par rapport aux incertitudes structurées et non structurées, et la marge dynamique effective $M_{dyn}$ caractérisant la robustesse de la boucle par rapport aux incertitudes non structurées, les deux indicateurs effectifs étant :

- un indicateur statique effectif $Ind_s$ qui est la marge statique effective $M_{st}$ et
- un indicateur dynamique effectif $Ind_D$ qui est une fonction directe de la marge dynamique effective $M_{dyn}$.

**10.** Dispositif d'asservissement selon la revendication 9, **caractérisé en ce que** le calculateur est en outre configuré pour exécuter une procédure itérative de tests et d'évaluations, ladite procédure itérative étant arrêtée sur un correcteur, qui est alors le correcteur optimal, lorsque les deux indicateurs effectifs $Ind_s$ et $Ind_D$ deviennent supérieurs à des seuils respectifs déterminés pour une valeur courante de marge de retard la plus faible possible et donc pour la plus grande performance.

**Patentansprüche**

**1.** Verfahren zur automatisierten Optimierung einer Ansteuerung eines durch eine Vorgabe $Y_c(t)$ gesteuerten realen mechatronischen Systems,

wobei die Ansteuerung einen linearen Korrektor C in einer das mechatronische System G einschließenden Rückkopplungsschleife aufweist, wobei der Korrektor durch Korrektorparameter definiert ist, wobei das reale mechatronische System G durch eine als nominale Transferfunktion $G_o$ bezeichnete Transferfunktion zwischen einem Eingangsbefehl U(t) und einer für die Ansteuerung gemessenen Ausgangsvariablen Y(t) dargestellt worden ist, wobei die Ansteuerung durch eine bestimmbare Robustheit gegenüber strukturierten und nicht strukturierten Ungewißheiten des mechatronischen Systems und eine bestimmbare Leistung gekennzeichnet ist,

wobei in dem Verfahren und unter Verwendung der nominalen Transferfunktion die Korrekturparameter bestimmt werden, die der Steuerung einen zufriedenstellenden Kompromiß zwischen Leistung und Robustheit gewährleisten, wobei die Robustheit der auf die nominale Transferfunktion angewendeten Schleife von einem Modulspielraum MMC abhängt, die Leistung der auf die nominale Transferfunktion angewendeten Schleife von einem Verzögerungsspielraum MRC abhängt,

wobei durch ein iteratives Verfahren unter den einen zufriedenstellenden Kompromiß zwischen der Leistung und der Robustheit aufweisenden Korrektoren der leistungsfähigste, d.h. optimale Korrektor ausgewählt wird, **dadurch gekennzeichnet, daß** das iterative Verfahren darin besteht, einen laufenden Wert des Verzögerungsspielraums MRC für einen gleichen Modulspielraum MMC weiterzuentwickeln und den Korrektor oder die Korrektoren mit dem entsprechenden Verzögerungsspielraum MRC beim laufenden Wert an der Ansteuerung des realen mechatronischen Systems einzeln zu testen und ein Anregungssignal $w(t)$ in die Schleife einzugeben und zwei effektive Indikatoren zu bewerten, die auf wenigstens einem effektiven statischen Spielraum $M_{st}$ und einem effektiven dynamischen Spielraum $M_{dyn}$ beruhen, wobei der effektive statische Spielraum $M_{st}$ die allgemeine Robustheit der Schleife gegenüber strukturierten und nicht strukturierten Ungewißheiten charakterisiert und der effektive dynamische Spielraum $M_{dyn}$ die Robustheit der Schleife gegenüber den nicht strukturierten Ungewißheiten charakterisiert, wobei die beiden effektiven Indikatoren

- ein effektiver statischer Indikator $Ind_s$, der der statische effektive Spielraum $M_{st}$ ist, und
- ein effektiver dynamischer Indikator $Ind_D$, der eine direkte Funktion des effektiven dynamischen Spielraums $M_{dyn}$ ist,

sind,

wobei das iterative Verfahren bei einem Korrektor gestoppt wird, der dann der optimale Korrektor ist, wenn die beiden effektiven Indikatoren $Ind_s$ und $Ind_D$ größer als jeweilige Schwellen $Ss$ und $S_D$ werden, die für einen geringstmöglichen laufenden Wert des nominalen Verzögerungsspielraums MRC bei einer gleichen Höhe des nominalen Modulspielraums MMC und damit für die größte Leistungsfähigkeit bestimmt sind.

2. Verfahren gemäß Anspruch 1, **dadurch gekennzeichnet, daß** bei jeder Bewertung eine effektive komplementäre Empfindlichkeitsfunktion $T_{yp}(s)$ geschätzt wird und die beiden effektiven Indikatoren $Ind_s$ und $Ind_D$ von dieser effektiven komplementären Empfindlichkeitsfunktion $T_{yp}(s)$ aus berechnet werden, wobei der effektive statische Indikator $Ind_s$ der effektive statische Spielraum $M_{st}$ ist, der gleich dem Kehrwert der Norm $H_\infty$ der effektiven komplementären Empfindlichkeitsfunktion

$$M_{st} = \frac{1}{\max_\omega |T_{yp}(j\omega)|}$$

ist, und

der effektive dynamische Indikator $Ind_D$ ein Verhältnis zwischen, im Zähler, dem effektiven dynamischen Spielraum $M_{dyn}$ und, im Nenner, einem Parameter, der unter dem nominalen Verzögerungsspielraum MRC und dem nominalen dynamischen Spielraum $M_{dyn0}$ ausgewählt ist, ist, wobei der effektive dynamische Spielraum $M_{dyn}$ gleich dem Kehrwert des Maximums des Gewinns des Produkts aus der effektiven komplementären Empfindlichkeitsfunktion und der Frequenz $\omega$ ist:

$$M_{dyn} = \frac{1}{\max_\omega |\omega T_{yp}(j\omega)|} \,,$$

wobei der nominale Verzögerungsspielraum MRC und der nominale dynamische Spielraum $M_{dyn0}$ durch Berechnung auf der auf die nominale Transferfunktion angewendeten Schleife erhalten werden.

3. Verfahren gemäß Anspruch 1 oder Anspruch 2, **dadurch gekennzeichnet, daß** die nominale Transferfunktion des mechatronischen Systems eine Funktion mit einfachem Integrator oder mit doppeltem Integrator ist.

4. Verfahren gemäß einem der vorangehenden Ansprüche, **dadurch gekennzeichnet, daß** das Anregungssignal berechnet wird und im Wesentlichen ein weißes Rauschen ist.

5. Verfahren gemäß einem der vorangehenden Ansprüche, **dadurch gekennzeichnet, daß** die effektive komplementäre Empfindlichkeitsfunktion $T_{yp}(s)$ durch ein Identifizierungsverfahren geschätzt wird, wobei das Identifizierungsverfahren unter den folgenden Verfahren ausgewählt wird:

- rekursives Identifizierungsverfahren in Echtzeit, vorzugsweise durch ein parametrisches Identifizierungsverfahren,
- nicht parametrisches Identifizierungsverfahren durch spektrale Identifizierung, insbesondere durch Verwendung einer gleitenden diskreten Fouriertransformation.

6. Verfahren gemäß Anspruch 5, **dadurch gekennzeichnet, daß** das Identifizierungsverfahren in Echtzeit oder zeitlich versetzt durchgeführt wird.

7. Verfahren gemäß einem der vorangehenden Ansprüche, **dadurch gekennzeichnet, daß** man in der Rückkopplungsschleife einen Rechner einsetzt, wobei der Rechner einen Teil der dem Korrektor C entsprechenden Korrckturrcchnung aufweist, wobei der Korrektor C ein Signal verwendet oder am Eingang empfängt, das aus dem vom Rechner ermittelten Unterschied zwischen der Vorgabe $Y_c(t)$ und der zur Ansteuerung gemessenen Variablen am Ausgang Y(t) resultiert und am Ausgang ein Steuerungssignal U(t) erzeugt, wobei der Rechner außerdem dazu ausgelegt ist, daß bei den Tests dem Steuerungssignal das Erregungssignal w(t) vor der Übermittlung an das mechatronische System G zugefügt wird.

8. Servosteuerungsvorrichtung eines durch eine Vorgabe Yc(t) gesteuerten realen mechatronischen Systems,

wobei die Ansteuerung einen linearen Korrektor C in einer das mechatronische System G einschließenden Rückkopplungsschleife aufweist, wobei der Korrektor durch Korrektorparameter definiert ist, wobei das reale mechatronische System G durch eine als nominale Transferfunktion $G_o$ bezeichnete Transferfunktion zwischen einem Eingangsbefehl U(t) und einer für die Ansteuerung gemessenen Ausgangsvariablen Y(t) dargestellt sein kann, wobei die Ansteuerung durch eine bestimmbare Robustheit gegenüber strukturierten und nicht strukturierten Ungewißheiten des mechatronischen Systems und eine bestimmbare Leistung **gekennzeichnet ist, dadurch** gekennzeichnet, daß sie einen Rechner aufweist, der zur Durchführung des automatisierten Optimierungsverfahrens eines der vorangehenden Ansprüche ausgelegt ist,
und bei der der Rechner während der Tests am realen mechatronischen System eine Ansteuerung durch eine Signalverarbeitung durch einen getesteten Korrektor sicherstellt, wobei der getestete Korrektor C ein Signal verwendet oder am Eingang empfängt, das aus dem vom Rechner ermittelten Unterschied zwischen der Vorgabe $Y_c(t)$ und der zur Ansteuerung gemessenen Variablen am Ausgang Y(t) resultiert und am Ausgang ein Steuerungssignal U(t) erzeugt, wobei der Rechner außerdem so ausgelegt ist, daß dem Steuerungssignal bei den Tests das Erregungssignal *w(t)* vor der Übermittlung an das mechatronische System G zugefügt wird.

9. Servosteuerungsvorrichtung gemäß Anspruch 8, **dadurch gekennzeichnet, daß** der Rechner außerdem dazu ausgelegt ist, zwei effektive Indikatoren zu bewerten, die mindestens auf einem effektiven statischen Spielraum $M_{st}$ und einem effektiven dynamischen Spielraum $M_{dyn}$ beruhen, wobei der effektive statische Spielraum $M_{st}$ die insgesamte Robustheit der Schleife gegenüber strukturierten und nicht strukturierten Ungewißheiten charakterisiert und der effektive dynamische Spielraum $M_{dyn}$ die insgesamte Robustheit der Schleife gegenüber nicht strukturierten Ungewißheiten charakterisiert, wobei die beiden effektiven Indikatoren

- ein effektiver statischer Indikator $Ind_S$, der der effektive statische Spielraum $M_{st}$ ist, und
- ein effektiver dynamischer Indikator $Ind_D$, der eine direkte Funktion des effektiven dynamischen Spielraums $M_{dyn}$ ist,

sind.

10. Servosteuerungsvorrichtung gemäß Anspruch 9, **dadurch gekennzeichnet, daß** der Rechner außerdem dazu ausgelegt ist, ein iteratives Verfahren von Tests und Bewertungen durchzuführen, wobei das iterative Verfahren bei einem Korrektor endet, der dann der optimale Korrektor ist, wenn die beiden effektiven Indikatoren $Ind_S$ und $Ind_D$ größer als jeweilige Schwellenwerte werden, die für einen kleinstmöglichen laufenden Wert eines Verzögerungsspielraums und damit für die größte Leistung bestimmt sind.

**Claims**

1. A method for automated optimisation of a servo control of a real mechatronic system controlled by a setpoint $Y_c(t)$, said servo control comprising a linear corrector C in a feedback loop including the mechatronic system G, the corrector being defined by correction parameters, the real mechatronic system G having been modelled by a transfer function, called nominal transfer function $G_0$, between an input control U(t) and an output variable Y(t) measured for servo control purpose, the servo control being **characterized by** a robustness with respect to the structured and non-structured uncertainties of the mechatronic system and a performance that can be determined, in which method, using the nominal transfer function, corrector parameters are determined, which ensure, at the time of control, a satisfying compromise between performance and robustness, the robustness of the loop applied to the nominal transfer function being dependent on a module margin MMC, the performance of the loop applied to the nominal transfer function being dependant on a delay margin MRC,

   wherein, by an iterative procedure, the most performant corrector, called optimum corrector, is determined among the correctors having a satisfying compromise between performance and robustness, **characterized in that** said iterative procedure consists in varying a current value of the delay margin MRC, for a same module margin MMC, and testing individually the corrector(s) having a delay margin MRC corresponding to the current value on the servo control of the real mechatronic system and injecting into the loop an excitation signal w(t) and evaluating two effective indicators based on at least an effective static margin $M_{st}$ and an effective dynamic margin $M_{dyn}$, the effective static margin $M_{st}$ characterizing the global robustness of the loop with respect to the structured and non-structured uncertainties, and the effective dynamic margin $M_{dyn}$ characterizing the robustness of the loop with respect to the non-structured uncertainties, the two effective indicators being:

   - an effective static indicator $Ind_s$ that is the effective static margin $M_{st}$ and
   - an effective dynamic indicator $Ind_D$ that is a direct function of the effective dynamic margin $M_{dyn}$,

   the iterative procedure being stopped on a corrector, which is then the optimum corrector, when the two effective indicators $Ind_s$ and $Ind_D$ become higher than respective thresholds $S_s$ and $S_D$ determined for a current value of nominal delay margin MRC that is the lowest possible, for a same level of nominal module margin MMC, and hence for the highest performance.

2. The method according to claim 1, **characterized in that** during each evaluation, an effective complementary sensitivity function $T_{yp}(s)$ is estimated and the two effective indicators $Ind_s$ and $Ind_D$ are calculated based on said effective complementary sensitivity function $T_{yp}(s)$, the effective static indicator $Ind_s$ being the effective static margin $M_{st}$ that is equal to the inverse of the norm $H_\infty$ of the effective complementary sensitivity function:

$$M_{st} = \frac{1}{\max\limits_{\omega} |T_{yp}(j\omega)|},$$

   and

   the effective dynamic indicator $Ind_D$ being a ratio between, in the numerator, the effective dynamic margin $M_{dyn}$ and, in the denominator, a parameter chosen among the nominal delay margin MRC and the nominal dynamic margin $M_{dyn0}$, the effective dynamic margin $M_{dyn}$ being equal to the inverse of the maximum of the gain of the product of the effective complementary sensitivity function by the frequency $\omega$:

$$M_{dyn} = \frac{1}{\max\limits_{\omega} |\omega T_{yp}(j\omega)|},$$

   the nominal delay margin MRC and the nominal dynamic margin $M_{dyn0}$ being obtained by calculation on the loop applied to the nominal transfer function.

3. The method according to claim 1 or claim 2, **characterized in that** the nominal transfer function of the mechatronic system is a simple-integrator or double-integrator function.

4. The method according to any one of the preceding claims, **characterized in that** the excitation signal is calculated and is substantially a white noise.

5. The method according to any one of the preceding claims, **characterized in that** the effective complementary sensitivity function $T_{yp}(s)$ is estimated by an identification method, said identification method being chosen among the following methods:

   - method of real-time recursive identification, preferably by a parametric identification method,
   - method of non-parametric identification by spectral identification, in particular using a sliding discrete Fourier transform.

6. The method according to claim 5, **characterized in that** the identification method is implemented in real time or in delayed time.

7. The method according to any one of the preceding claims, **characterized in that** a calculator is implemented within the feedback loop, said calculator comprising a correction calculation part corresponding to the corrector C, the corrector C receiving as an input or using a signal resulting from the difference computed by the calculator between the setpoint $Y_c(t)$ and the output variable Y(t) measured for servo control purpose, and producing as an output a control signal U(t), said calculator being furthermore configured so that, during the tests, the excitation signal *w(t)* is added to the control signal before the sending to the mechatronic system G.

8. A servo-control system for a real mechatronic system controlled by a setpoint $Y_c(t)$, said servo control comprising a linear corrector C in a feedback loop including the mechatronic system G, the corrector being defined by corrector parameters, wherein the real mechatronic system G can be modelled by a transfer function, called nominal transfer function $G_o$, between an input control U(t) and an output variable Y(t) measured for servo control purpose, the servo control system being **characterized by** a robustness with respect to the structured and non-structured uncertainties of the mechatronic system and a performance that can be determined,
   **characterized in that** it comprises a calculator configured to execute the automated optimisation method of any one of the preceding claims and in which, during tests on the real mechatronic system, the calculator ensures the servo control by processing signals using a tested corrector, the tested corrector C receiving as an input, or using, a signal resulting from the difference computed by the calculator between the setpoint $Y_c(t)$ and the output variable Y(t) measured for servo control purpose, and producing as an output a control signal U(t), said calculator being furthermore configured so that, during the tests, an excitation signal w(t) is added to the control signal before the sending to the mechatronic system G.

9. A servo-control system according to claim 8, **characterized in that** the calculator is moreover configured to evaluate two effective indicators based on at least an effective static margin $M_{st}$ and an effective dynamic margin $M_{dyn}$, the effective static margin $M_{st}$ characterizing the global robustness of the loop with respect to the structured and non-structured uncertainties, and the effective dynamic margin $M_{dyn}$ characterizing the robustness of the loop with respect to the non-structured uncertainties, the two effective indicators being:

   - an effective static indicator $Ind_s$ that is the effective static margin $M_{st}$ and
   - an effective dynamic indicator $Ind_D$ that is a direct function of the effective dynamic margin $M_{dyn}$.

10. The servo-control device according to claim 9, **characterized in that** the calculator is moreover configured to execute an iterative procedure of tests and evaluations, said iterative procedure being stopped on a corrector, which is then the optimum corrector, when the two effective indicators $Ind_s$ and $Ind_D$ become higher than respective thresholds $S_s$ and $S_D$ determined for a current value of nominal delay margin MRC that is the lowest possible, and hence for the highest performance.

Figure 1

## Figure 2

## RÉFÉRENCES CITÉES DANS LA DESCRIPTION

### Documents brevets cités dans la description

- WO 2006131664 A

### Littérature non-brevet citée dans la description

- **PH. DE LARMINAT.** Automatique appliquée. 2009
- **IOAN DORÉ LANDAU.** Commande des systèmes. 2002
- **LENNARDT LJUNG.** *Prentice Hall,* 1999
- **R. LONGCHAMP ; Y. PIGUET.** Closed-loop estimation of robustness margins by the relay method. *IEEE American control conférence proceedings,* 1995, 3687-2691
- **D. GARCIA ; A. KARIMI ; R. LONGCHAMP.** Robust PID tuning with spécification on modulus margin. *proceedings of the IEEE American control conference,* 2004